# EUROPÄISCHE PATENTSCHRIFT

(11) **EP 0 612 555 B1**
(45) Veröffentlichungstag und Bekanntmachung des Hinweises auf die Patenterteilung: **14.02.1996**
(21) Anmeldenummer: 94101520.8
(22) Anmeldetag: 02.02.1994
(51) Int. Cl.: B01D 53/34, A62D 3/00

(54) **Verfahren zum Abbau von in Gasen enthaltenen hochtoxischen halogenierten organischen Verbindungen**
Process for the degradation of highly toxic halogenated organic compounds contained in gas
Procédé pour la dégradation de composés organiques halogénés à haute toxicité contenus dans des gaz

(30) Priorität: 20.02.1993 DE 4305344
(43) Veröffentlichungstag der Anmeldung: 31.08.1994
(73) Patentinhaber: Degussa Aktiengesellschaft, D-60311 Frankfurt (DE)
(72) Erfinder: von Wedel, Wedigo Dr., F-75007 Paris (FR); Weck, Manfred Dr., D-63755 Alzenau (DE); Tarabocchia, John, D-61381 Friedrichsdorf (DE); Schelbert, Ulrich, D-63755 Alzenau (DE); Möller, Alexander Dr., D-63571 Gelnhausen (DE); Eickhoff, Hubertus, D-63755 Alzenau (DE)

(56) Entgegenhaltungen:
- EP-A- 0 373 312
- EP-A- 0 546 314
- WO-A-92/19364
- DE-A- 3 733 208
- US-A- 4 780 287

## Beschreibung

Die Erfindung betrifft ein Verfahren zum Abbau von in SO₂-freien Gasen enthaltenen hochtoxischen halogenierten organischen Verbindungen, insbesondere polychlorierten Dibenzodioxinen (PCDD) und polychlorierten Dibenzofuranen (PCDF), wobei die hochtoxischen Verbindungen durch oxidativen Abbau aus dem Gas entfernt werden. Bei den Gasen kann es sich insbesondere um Abgase chemischer Prozesse sowie um Abgase von Müllverbrennungsanlagen handeln, wobei die Gase zusätzlich andere Schadstoffe, wie etwa NOₓ, enthalten können, aber frei von Schwefeldioxid sind.

In der öffentlichen Diskussion sowie generell der Verfahrensoptimierung zur Verminderung der Emission hochtoxischer halogenierter organischer Verbindungen, wie insbesondere der PCDD's und PCDF's, wie sie im Rahmen chemischer Prozesse und Verbrennungsprozesse in dabei anfallenden Gasen enthalten sein können, zunehmend Bedeutung eingeräumt. Der Gehalt hochtoxischer PCDD's und PCDF's in derartigen Gasen kann im Bereich von einigen Zehntel ng TE/Nm³ bis etwa 30 ng TE/Nm³ liegen. (ng TE/Nm³ = Nanogramm Toxizitätsäquivalente pro Normkubikmeter). Der Gesetzgeber schreibt in der 17. Verordnung zum Bundesimmissions-Schutzgesetz ab 1996 einen Grenzwert von 0,1 ng TE/Nm³ vor, so daß verbesserte Verfahren zur Entfernung bzw. zum Abbau der Schadstoffe zwecks Erreichung des gesetzlichen Grenzwerts erforderlich sind.

Bei den hochtoxischen halogenierten organischen Verbindungen handelt es sich insbesondere um PCDD's und PCDF's unterschiedlichen Chlorierungsgrads (n + m in der Formel steht für eine ganze Zahl von 1 bis 8), welche in zahlreichen Isomeren bzw. Kongeneren unterschiedlicher Toxizität auftreten 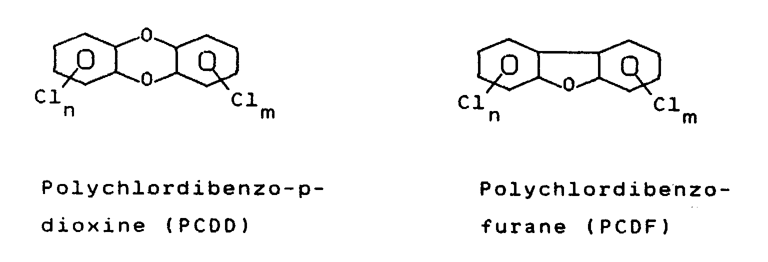
Der oben genannte TE-Wert errechnet sich, indem die jeweilige Konzentration der einzelnen PCDD's und PCDF's mit dem jeweils zuzuordnenden NATO-CCMS-Toxizitätsäquivalentfaktor multipliziert und die Produkte addiert werden. Das besondere hochtoxische 2,3,7,8-Tetrachlordibenzodioxin hat den TE-Faktor 1; beispielhaft werden weitere TE-Faktoren erwähnt: 1,2,3,7,8-PentaCDD 0,5; 1,2,3,4,7,8-HexaCDD 0,1; 2,3,7,8-TetraCDF 0,1; 2,3,4,7,8-PentaCDF 0,5; 1,2,3,4,7,8-HexaCDF 0,1.

Bisher erfolgt die Entfernung der in Gasen, wie Rauchgasen von Verbrennungsprozessen, enthaltenen Schadstoffe vom PCDD- und PCDF-Typ durch Überleiten der Gase über Adsorptionsmittel. Bekannt sind Adsorptionsverfahren im Wander- bzw. Festbett mit Herdofenkoks und Flugstromverfahren mit einem Kalk-/Aktivkohle-Additiv. Die Adsorptionsverfahren haben den Nachteil, daß aus einem Abgasproblem ein Abfallproblem wird, weil das mit Schadstoffen beladene Adsorptionsmittel entweder aufwendig regeneriert oder als Sondermüll entsorgt werden muß. Zusätzlich bestehen beim Betreiben von mit Aktivkohle gefüllten Adsorbern Sicherheitsrisiken - etwa infolge von CO-Bildung durch sogenannte "hot spots" oder gar Verbrennung - was aufwendige sicherheitstechnische Maßnahmen notwendig macht.

Gemäß dem Verfahren der DE-OS 40 01 305 lassen sich Dioxine und Furane aus Rauchgasen dadurch entfernen, daß die Rauchgase nach einer nassen Reinigungsstufe in Gegenwart von beigemischtem Wasserstoffperoxid mit UV-Strahlen der Wellenlänge unter 310 nm, vorzugsweise unter 245 nm, behandelt werden. Ausweislich der Beispiele in dem genannten Dokument lassen sich nur Restdioxin/-furangehalte von 1 ng TE/m³ erhalten. Dieses Verfahren ist offensichtlich nicht geeignet, Restgehalte unter dem zukünftigen gesetzlichen Grenzwert von 0,1 ng TE/m³ zu erreichen. Zudem ist der technische Aufwand zum Eintrag der erforderlichen Energie in Form von UV-Strahlen aufwendig.

In der internationalen Patentanmeldung WO 92/19364 wird ein Verfahren zur Reinigung von kondensierbare organische Schadstoffe enthaltenden Rauchgasen durch Naßreinigung unter Verwendung einer rückführbaren Waschflüssigkeit offenbart. Die Waschflüssigkeit enthält einen fein verteilten Feststoff, wie Aktivkohle, oder ein Oxid von Titan, Aluminium, Eisen oder Silicium und kann zusätzlich ein Oxidationsmittel, wie Wasserstoffperoxid, enthalten. Unter den Schadstoffen, welche verfahrensgemäß abgetrennt werden können, werden auch halogenierte Dibenzodioxine und -furane genannt. In welchem Umfang die letztgenannten Stoffe abgetrennt und/oder chemisch abgebaut werden, läßt sich diesem Dokument nicht entnehmen.

Ein weiteres Verfahren zur Verringerung von PCDD/PCDF-emissionen aus Abgasstrecken von Abfallverbrennungsanlagen ist aus der EP-Patentanmeldung 0 373 312 bekannt: In diesem Verfahren wird in die Abgasstrecke entweder überhitzter Wasserdampf eingeleitet oder letzterer in derselben durch Einleiten von Wasser erzeugt. Zusammen mit dem eingeleiteten Wasser oder Wasserdampf können auch katalytisch wirksame Metallsalze oder Oxidationsmittel, wie Wasserstoffperoxid, zugesetzt werden. Zweckmäßigerweise soll der zugesetzte oder gebildete überhitzte Wasserdampf eine Temperatur von mindestens 200 °C aufweisen.

In der noch nicht veröffentlichten DE-Patentanmeldung P 42 10.055.0 entspricht der ebenfalls nicht vorveröffentlichten EP-A-0 546 314 wird ein Verfahren zum Entfernen von halogenierten Verbindungen, wie PCDD's und PCDF's aus gegebenenfalls NOₓ enthaltenden Abgasen offenbart, wobei das Abgas gegebenenfalls über ein Festbett oder Wirbelbett geleitet und mit Caro'scher Säure H₂SO₅ oder einem ihrer Salze in Kontakt gebracht wird. Die Caro'sche Säure kann in situ aus Wasserstoffperoxid und Schwefelsäure, welche zugesetzt oder aus im zu behandelnden Abgas anwesendem Schwefeldioxid und H₂O₂ entsteht, gebildet werden. Als katalytisch wirkende Feststoffe werden unter anderem pyrogene und gefällte Kieselsäuren, Aluminiumoxid, Titandioxid und Zeolithe genannt. Die DE P 42 10 055.0 lehrt, daß für den oxidativen Abbau der PCDD's und PCDF's die Caro'sche Säure eine entscheidende Rolle spielt; sofern das zu behandelnde Gas kein oder nur wenig SO₂ enthält, muß SO₂ oder H₂SO₄ zugesetzt werden. Obgleich die hochtoxischen Dioxine und Furane unter den Verfahrensbedingungen am Feststoff zu über 90 % oxidativ zu weniger toxischen Produkten abgebaut werden und nur ein geringer Anteil auf dem Feststoff adsorbiert bleibt, mußte als Nachteil angesehen werden, daß nur SO₂-haltige Gase dem Verfahren zugänglich waren oder SO₂ bzw. H₂SO₄ zugesetzt werden mußte.

Aufgabe der vorliegenden Erfindung ist somit, ein weiteres Verfahren zum Abbau von in SO₂-freien Gasen enthaltenen hochtoxischen halogenierten organischen Verbindungen, insbesondere polychlorierten Dibenzodioxinen (PCDD) und -furanen (PCDF), durch Behandlung des Gases mit einer Persauerstoffverbindung aufzuzeigen, das die Nachteile des vorbekannten Verfahrens vermeidet. Das Verfahren sollte zudem geeignet sein, 0,1 ng TE/Nm³ sicher zu erreichen.

Gelöst wird die Aufgabe dadurch, daß man das Gas bei einer Temperatur im Bereich oberhalb seines Taupunktes und 180 °C in Gegenwart von Wasserstoffperoxid oder einer Wasserstoffperoxid freisetzenden Verbindung, ausgenommen Caro'sche Säure (H₂SO₅) oder Salze derselben, über einen im wesentlichen anorganischen Feststoffkontakt aus der Reihe der Fällungskieselsäuren, pyrogenen und oberflächenmodifizierten Kieselsäuren, Kieselgel, Kieselgur, natürlichen und synthetischen Silikate, Zeolithe, Metalloxide, Mischoxide und Glasfritten, Trägerstoffe mit Oxiden von Eisen, Chrom, Mangan, Vanadium, Molybdän oder Wolfram auf ihrer Oberfläche, Molybdatophosphate und Wolframatophosphate leitet.

Die Unteransprüche richten sich auf bevorzugte Ausführungsformen des Verfahrens.

Als Persauerstoffverbindung werden dem zu behandelnden Gas oder dem Feststoff Wasserstoffperoxid oder Wasserstoffperoxid freisetzende Verbindungen, wie Peroxide, Perborate, Percarbonate, Persilikate sowie Perphosphate der Alkalimetalle oder Erdalkalimetalle zugesetzt. Salze werden in Form einer wäßrigen Lösung oder Suspension zugesetzt, und zwar in der Weise, daß eine wirksame Menge der Perverbindung zwecks Aktivierung in Kontakt mit dem Feststoff kommt. Ob die genannten Persalze per se wirken oder erst nach Freisetzung von Wasserstoffperoxid, ist noch nicht geklärt. Besonders bevorzugt wird Wasserstoffperoxid als wäßrige Lösung beliebiger Konzentration, vorzugsweise 30 bis 70 Gew.-%, eingesetzt. Die wäßrige H₂O₂-Lösung wird in wirksamer Menge dem System zugeführt. "Wirksam" bedeutet, daß die Menge ausreicht, um sowohl gegebenenfalls anwesende leicht oxidierbare Schadstoffe als auch Dioxine und Furane oxidativ abbauen zu können. Üblicherweise wird Wasserstoffperoxid gegenüber den Dioxinen und Furanen im Überschuß eingesetzt.

Das zu behandelnde Gas wird in Gegenwart einer Persauerstoffverbindung über einen katalytisch ausreichend wirksamen Feststoff geleitet, der zweckmäßigerweise in Form eines Festbetts oder Wirbelbetts angeordnet ist. Die Kontaktzeit richtet sich nach dem gewünschten Schadstoffabbau. Es versteht sich, daß im Falle des bevorzugten Festbetts die Kontaktzeit durch Reduzierung der Strömungsgeschwindigkeit des Gases und Erhöhung der Höhe des Festbetts vergrößert werden kann. Mit Strömungsgeschwindigkeiten im Bereich von 0,1 bis 5 m/s lassen sich gute Ergebnisse erzielen.

Die Persauerstoffverbindung wird entweder unmittelbar dem zu behandelnden Gas zudosiert oder auf den Feststoffkontakt aufgebracht, etwa durch Imprägnieren des Feststoffs oder durch Aufsprühen einer wäßrigen Lösung der Persauerstoffverbindung. Vorzugsweise wird eine wäßrige Wasserstoffperoxidlösung direkt dem Gas, das meist als kontinuierlicher Gasstrom behandelt werden muß, zudosiert. Das Zudosieren erfolgt vorzugsweise durch Versprühen einer wäßrigen H₂O₂-Lösung in den Gasstrom oder durch Einbringen von H₂O₂-Dampf in den Gasstrom.

Die Behandlung des SO₂-freien Gases wird oberhalb des Taupunktes des Gases durchgeführt, um eine Kondensation am Feststoffkontakt zu vermeiden. Eine Temperatur im Bereich oberhalb des Taupunktes, insbesondere mindestens 5°C oberhalb des Taupunktes, und bis 180°C, vorzugsweise 120°C ist besonders geeignet. Da der Taupunkt von Verbrennungsgasen häufig um 40 bis 60°C liegt, erfolgt in diesen Fällen die Behandlung vorzugsweise im Bereich von 80°C bis 120°C. Sofern als Persauerstoffverbindung Salze eingesetzt werden, kann es zweckmäßig sein, wenigstens zeitweise durch Unterschreiten des Taupunktes Kondensation herbeizuführen, um auf dem Festbett abgeschiedene Salze mit dem Kondensat auszuwaschen, um die Aktivität des Kontaktes aufrechtzuerhalten.

Die folgenden Feststoffkontakte können als feinteilige, granulierte, tablettierte oder zu beliebigen Formkörpern, eingeschlossen Wabenkörpern, verformte oder auf geformte Träger aufgebrachte Stoffe allein oder in Mischung eingesetzt werden:
- Kieselgele, Kieselgur, Fällungskieselsäuren, pyrogene Kieselsäuren, oberflächenmodifizierte, etwa hydrophobierte Kieselsäuren;
- natürliche und synthetische Silikate, darunter Calcium- und Aluminiumsilikate, Schichtsilikate;
- Zeolithe, wie Mordenit, ZSM-5-Zeolithe, dealuminierte Y-Zeolithe;
- Metalloxide, wie gamma- und alpha-Al₂O₃ und Titandioxid und Mischoxide und Glasfritten;
- vorgenannte Stoffe und andere Trägerstoffe, welche auf ihrer Oberfläche Oxide der Elemente Eisen, Chrom, Mangan, Vanadium, Molybdän oder Wolfram aufweisen.
- Heteropolysäuren aus der Reihe Molybdatophosphate und Wolframatophosphate.

Die Feststoffkontakte weisen teilweise recht unterschiedliche Wirksamkeiten auf, da sie in unterschiedlichem Ausmaß die PCDD's und PCDF's adsorbieren und die Oxidationsreaktion katalysieren. Als besonders bevorzugte Feststoffkontakte haben sich Kieselsäuren erwiesen, denn hier scheinen Adsorption und Katalyse im Hinblick auf ihren Einsatz zum erfindungsgemäßen Schadstoffabbau optimal aufeinander abgestimmt zu sein: Bei einer Abbaurate über 90 % verbleiben nur geringe Mengen Schadstoffe auf dem Kontakt adsorbiert, wobei die adsorbierte Menge auch im Dauerbetrieb praktisch nicht zunimmt, sodaß die Wirksamkeit auch nach mehrmonatigem kontinuierlichen Betrieb nicht nachläßt. Demgegenüber erwiesen sich die getesteten 12-Ring-Zeolithe (Mordenit und dealuminierter Y-Zeolith) als gut adsorbierend aber weniger katalytisch wirksam - obgleich auch hier im behandelten Gas ein Restgehalt unter 0,1 ng TE/Nm³ erreicht wird.

Die besonders bevorzugten Feststoffkontakte pyrogene amorphe Kieselsäuren mit einer spezifischen Oberfläche (BET) von 100 bzw. 380 m²/g wurden in Tablettenform (6 x 5,5 mm), gefällte Kieselsäuren als Strangpreßling (7 x 6 mm) eingesetzt.

Das erfindungsgemäße Verfahren läßt sich in bekannte Reinigungsprozesse für Gase integrieren.

Es zeigte sich, daß weder Wasserstoffperoxid allein, d. h. in Abwesenheit eines Feststoffkontaktes, noch der Feststoffkontakt allein, d. h. ohne Zugabe von Wasserstoffperoxid, in der Lage sind, den Abbau der hochtoxischen halogenierten organischen Verbindungen zu bewerkstelligen. Vielmehr bedarf es der Kombination aus Feststoffkontakt und Wasserstoffperoxid, um die Schadstoffe nicht nur aus dem Gas zu nahezu 100 % zu entfernen, sondern die Schadstoffe gleichzeitig weitgehend zu weniger toxischen Stoffen abzubauen.

Das erfindungsgemäße Verfahren zeichnet sich durch seine hohe Effizienz bei gleichzeitig einfacher Handhabung und geringem technischen Aufwand für die erforderliche Vorrichtung aus. Es lassen sich problemlos Restwerte von unter 0,1 ng TE/Nm³ erzielen, und zwar bei einer Abbaurate bis meist über 90 %. Der Feststoffkontakt ist unbrennbar und weist eine hohe Standzeit auf; im Falle des besonders bevorzugten Feststoffkontakts trat auch nach mehrmonatigem Betrieb kein Aktivitätsabfall auf. Entgegen der Lehre der DE-P 42 10 055.0 erwies es sich überraschenderweise als überflüssig, im Falle SO₂-freier Gase diesen SO₂ oder H₂SO₄ zwecks Bildung von Caro'scher Säure zuzuführen.

### Beispiel

Das Abgas eines Gekrätzofens, das völlig frei von Schwefeldioxid (SO₂) war, enthielt PCDD's und PCDF's in einer Menge von 12,6 ng TE/Nm³. Ziel war, den PCDD/PCDF-Gehalt auf unter 0,1 ng TE/Nm³ abzusenken, wobei das kontaminierte Gas mit Wasserstoffperoxid versetzt und das Gasgemisch über einen in einem Festbett angeordneten Feststoffkontakt geleitet wurde.

Der Rohrreaktor für den Feststoffkontakt enthielt 65 g SiO₂-Tabletten, hergestellt aus pyrogenem Siliciumdioxid mit einer BET-Oberfläche von 200 m²/g; Temperatur im Reaktor 80°C; isothermer Betriebszustand durch Silberummantelung des Reaktors. Taupunkt des Gases 55°C. Mittels eines Dosimaten wurde 50 gew.-%ige wäßrige H₂O₂-Lösung mit einer Dosierrate von 0,01 ml/min in einem Wärmeaustauscher, dessen Temperatur konstant auf 90°C gehalten wurde, verdampft und dem Abgasstrom zugemischt. Der Volumenstrom des Abgases (Rohgas) betrug 1 Nm³/h.

Während 6 Stunden wurde das H₂O₂ enthaltende Gasgemisch über den Festbettkontakt geleitet. Sowohl das Rohgas als auch das den Kontakt verlassende Reingas wurden gemäß der VDI-Richtlinie 3499 Bl. 1 E (Ausgabe 03/90) auf ihren PCDD- und PCDF-Gehalt analysiert; die Berechnung der Toxizitätsäquivalente (TE) erfolgte nach der international anerkannten NATO-CCMS-Toxizitätsäquivalenzfaktorliste. Die Probenahme erfolgte mittels XAD-z Kartuschen mit C 1234-TetraCDD Standard, die Dioxin/Furan-Bestimmung mittels GC-MS. Ferner wurde die auf dem Kontakt adsorbierte Menge PCDD/PCDF nach der sechsstündigen Bestriebsdauer analytisch erfaßt.

Folgende Ergebnisse wurden gefunden:

| | |
|---|---|
| Rohgas | 12,6 ng TE/Nm³ |
| Reingas | 0,05 ng TE/NM³ |
| Kontakt | 0,04 ng TE/g |

Damit werden die im Rohgas enthaltenen Dioxine und Furane fast quantitativ abgebaut; lediglich Spuren von Dioxinen/Furanen befinden sich nach Versuchsende auf dem Kontakt. Diese akkumulieren sich jedoch auch nach längerer Versuchsdauer nicht auf dem Kontakt.

## Patentansprüche

1. Verfahren zum Abbau von in SO₂-freien Gasen enthaltenen hochtoxischen halogenierten organischen Verbindungen, insbesondere polychlorierten Dibenzodioxinen (PCDD) und -furanen (PCDF), durch Behandlung des Gases mit einer Persauerstoffverbindung,
dadurch gekennzeichnet,
daß man das Gas bei einer Temperatur im Bereich oberhalb seines Taupunktes bis 180 °C in Gegenwart von Wasserstoffperoxid oder einer Wasserstoffperoxid freisetzenden Verbindung, ausgenommen Caro'sche Säure (H₂SO₅) oder Salze derselben, über einen im wesentlichen anorganischen Feststoffkontakt aus der Reihe der Fällungskieselsäuren, pyrogenen und oberflächenmodifizierten Kieselsäuren, Kieselgel, Kieselgur, natürlichen und synthetischen Silikate, Zeolithe, Metalloxide, Mischoxide und Glasfritten, Trägerstoffe mit Oxiden von Eisen, Chrom, Mangan, Vanadium, Molybdän oder Wolfram auf ihrer Oberfläche, Molybdatophosphate und Wolframatophosphate leitet.

2. Verfahren nach Anspruch 1,
dadurch gekennzeichnet,
daß man die Behandlung bei einer Temperatur im Bereich zwischen mindestens 5 °C oberhalb des Taupunktes und 120 °C durchführt.

3. Verfahren nach Anspruch 1 oder 2,
dadurch gekennzeichnet,
daß man Wasserstoffperoxid dem zu behandelnden Gas in wirksamer Menge zudosiert und das resultierende Gasgemisch über den Feststoffkontakt leitet.

4. Verfahren nach einem oder mehreren der Ansprüche 1 bis 3,
dadurch gekennzeichnet,
daß der Feststoffkontakt in Form eines Festbetts oder Wirbelbetts, vorzugsweise eines Festbetts, angeordnet ist.

5. Verfahren nach einem oder mehreren der Ansprüche 1 bis 4,
dadurch gekennzeichnet,
daß man als Feststoffkontakt einen solchen aus der Reihe der Fällungskieselsäuren und pyrogenen Kieselsäuren sowie Aluminiumsilikat verwendet.

6. Verfahren nach Anspruch 5,
dadurch gekennzeichnet,
daß man den Feststoffkontakt in granulierter oder tablettierter Form verwendet.

## Claims

1. Process for the degradation of highly toxic halogenated organic compounds, in particular polychlorinated dibenzodioxins (PCDD) and dibenzofurans (PCDF), contained in SO₂-free gases by treating the gas with a peroxy compound,
characterised in that
the gas is passed at a temperature in the range from above its dew point to 180°C in the presence of hydrogen peroxide or of a compound which liberates hydrogen peroxide, with the exception of Caro's acid (H₂SO₅) or salts thereof, over a substantially inorganic solid heterogeneous catalyst from the range comprising precipitated silicas, pyrogenic and surface-modified silicas, silica gel, diatomaceous earth, natural and synthetic silicates, zeolites, metal oxides, mixed oxides and sintered glasses, supports with oxides of iron, chromium, manganese, vanadium, molybdenum or tungsten on their surface, molybdophosphates and tungstophosphates.

2. Process according to claim 1,
characterised in that
treatment is performed at a temperature in the range between at least 5°C above the dew point and 120°C.

3. Process according to claim 1 or 2,
characterised in that
an effective quantity of hydrogen peroxide is added to the gas to be treated and the resultant gas mixture is passed over the solid heterogeneous catalyst.

4. Process according to one or more of claims 1 to 3,
characterised in that
the solid heterogeneous catalyst is arranged in the form of a fixed bed or fluidised bed, preferably as a fixed bed.

5. Process according to one or more of claims 1 to 4,
characterised in that
the solid heterogeneous catalyst used is one from the range comprising precipitated silicas and pyrogenic silicas together with aluminium silicate.

6. Process according to claim 5,
characterised in that
the solid heterogeneous catalyst is used in pellet or tablet form.

## Revendications

1. Procédé pour la dégradation de composés organiques halogénés fortement toxiques contenus dans des gaz exempts de SO₂, en particulier de dibenzo-dioxines (PCDD) et - furannes (PCDF) polychlorés, par traitement du gaz par un composé peroxygéné, caractérisé
en ce qu'on amène le gaz à une température qui se situe dans le domaine allant d'une température supérieure à son point de rosée jusqu'a 180°C en présence de peroxyde d'hydrogène ou d'un composé libérant du peroxyde d'hydrogène, à l'exclusion de l'acide de Caro(H₂SO₅) ou de sels de ce dernier, sur un catalyseur solide essentiellement inorganique choisi parmi la série comprenant les acides siliciques de précipitation, des acides siliciques pyrogénés et à surfaces modifiées, le gel de silice, le kieselgur, des silicates naturels et synthétiques, des zéolithes, des oxydes métalliques, des oxydes mixtes et du verre fritté, des substances de support avec des oxydes de fer, de chrome, de manganèse, de vanadium, de molybdène ou de tungstène sur leurs surfaces, des molybdatophosphates et des tungsténatophosphates.

2. Procédé selon la revendication 1, caractérisé en ce qu'on effectue le traitement à une température dans le domaine entre une température supérieure d'au moins 5°C au point de rosée et 120°C.

3. Procédé selon la revendication 1 ou 2, caractérisé en ce qu'on procède à l'addition dosée de peroxyde d'hydrogène au gaz à traiter en une quantité efficace et on amène le mélange de gaz résultant sur le catalyseur solide.

4. Procédé selon l'une ou plusieurs des revendications 1 à 3, caractérisé en ce que le catalyseur solide est disposé sous la forme d'un lit fixe ou d'un lit fluidisé, de préférence d'un lit fixe.

5. Procédé selon l'une ou plusieurs des revendications 1 à 4, caractérisé en ce que, comme catalyseur solide, on utilise un catalyseur choisi parmi le groupe comprenant des acides siliciques de précipitation et des acides siliciques pyrogénés, ainsi que le silicate d'aluminium.

6. Procédé selon la revendication 5, caractérisé en ce qu'on utilise le catalyseur solide sous forme de granulés ou de comprimés.
